# EUROPEAN PATENT SPECIFICATION

(11) **EP 2 672 500 B1**
(45) Date of publication and mention of the grant of the patent: **18.04.2018**
(21) Application number: 13170292.0
(22) Date of filing: 03.06.2013
(51) Int. Cl.: H01J 35/18

(54) **Amorphous carbon and aluminum x-ray window**
Röntgenstrahlenfenster aus amorphem Kohlenstoff und Aluminium
Fenêtre en carbone amorphe et aluminium à rayons X

(30) Priority: 05.06.2012 US 201261655764 P; 22.06.2012 US 201261663173 P; 02.04.2013 US 201313855580; 02.04.2013 US 201313855575
(43) Date of publication of application: 11.12.2013
(73) Proprietor: Moxtek, Inc., Orem, UT 84057 (US)
(72) Inventor: Harker, Mallorie, Springville, UT Utah 84663 (US); Liddiard, Steven, Springville, UT Utah 84663 (US); Abbot, Jonathan, Saratoga Springs, UT Utah 84045 (US); Davis, Robert, Provo, UT Utah 84604 (US); Vanfleet, Richard, Provo, UT Utah 84604 (US); Pei, Lei, Provo, UT Utah 84606 (US)
(74) Representative: Walker, Ross Thomson

(56) References cited:
- EP-A2- 1 231 483
- DE-A1-102010 046 100
- JP-A- H04 337 295
- US-A1- 2009 086 923

## Description

### FIELD OF THE INVENTION

The present application is related generally to x-ray windows.

### BACKGROUND

X-ray windows can be used for enclosing an x-ray source or detection device. The window can be used to separate ambient air from a vacuum within the enclosure while allowing passage of x-rays through the window.

X-ray windows can be made of a thin film. It can be desirable to minimize attenuation of the x-rays (especially with low energy x-rays), thus it can be desirable that the film is made of a material and thickness that will result in minimal attenuation of the x-rays. Thinner films attenuate x-rays less than thick films. The film cannot be too thin; however, or the film may sag or break. A sagging film can result in cracking of corrosion resistant coatings. A broken film can allow air to enter the enclosure, often destroying the functionality of the device. Thus it can be desirable to have a film that is made of a material that will have sufficient strength to avoid breaking or sagging, but also as thin as possible for minimizing attenuation of x-rays.

X-ray windows are often used with x-ray detectors. In order to avoid contamination of an x-ray spectra from a sample being measured, it can be desirable that x-rays impinging on the x-ray detector are only emitted from the source to be measured. Unfortunately, x-ray windows can also fluoresce and thus emit x-rays that can cause contamination lines in the x-ray spectra. Contamination of the x-ray spectra caused by low atomic number elements is usually less problematic than contamination caused by higher atomic number elements. It can be desirable therefore that the window and support structure be made of materials with as low of an atomic number as possible in order to minimize this noise.

Information relevant to attempts to address these problems can be found in U.S. Patent Number 5,090,046. Further prior art DE 10 2010 046 100 A1 discloses the technical features of the preamble of claim 1.

### SUMMARY

It has been recognized that it would be advantageous to have an x-ray window that is strong, minimizes attenuation of x-rays, and minimizes x-ray spectra contamination. The present invention is directed to an x-ray window that satisfies these needs. The invention is defined in claim 1, further embodiments are set forth in the dependent claims. In all embodiments, the x-ray window includes a stack of thin film layers including an aluminum layer, a polymer layer, and an amorphous carbon layer. An embodiment can be hermetically sealed to an enclosure having a hollow center. The amorphous carbon layer can be disposed as the farthest layer away from the hollow center.

### BRIEF DESCRIPTION OF THE DRAWINGS

FIG. 1 is a schematic cross-sectional side view of an x-ray window including three layers of material, in accordance with an embodiment of the present invention;
FIG. 2 is a schematic cross-sectional side view of an x-ray window including an amorphous carbon layer 23, two aluminum layers 21a-b, and a polymer layer 22, in accordance with an embodiment of the present invention;
FIG. 3 is a schematic cross-sectional side view of an x-ray window including two amorphous carbon layers 23a-b, two aluminum layers 21a-b, and a polymer layer 22, in accordance with an embodiment of the present invention;
FIG. 4 is a schematic cross-sectional side view of an x-ray window including two amorphous carbon layers 23a-b, two aluminum layers 21a-b, and a polymer layer 22, in accordance with an embodiment of the present invention;
FIG. 5 is a schematic cross-sectional side view of an x-ray window including an amorphous carbon layer 23 disposed between a polymer layer 22 and an aluminum layer 21, in accordance with an embodiment of the present invention;
FIG. 6 is a schematic cross-sectional side view of an x-ray window including an aluminum layer 21 disposed between a polymer layer 22 and an amorphous carbon layer 23, in accordance with an embodiment of the present invention;
FIG. 7 is a schematic cross-sectional side view of an x-ray window including an aluminum layer 21 disposed between two amorphous carbon layers 23a-b, according to an example , which is not part of the claimed invention.
FIG. 8 is a schematic cross-sectional side view of an x-ray window 80 hermetically sealed to an opening of an enclosure 83 having a hollow center, in accordance with an embodiment of the present invention.

### DEFINITIONS

- As used herein, the term amorphous carbon means an allotrope of carbon that lacks crystalline structure and includes both sp3 (tetrahedral or diamond - like) bonds and sp2 (trigonal or graphitic) bonds.
- Hydrogenated amorphous carbon means an amorphous carbon in which some of the carbon atoms are bonded to hydrogen atoms.

### DETAILED DESCRIPTION

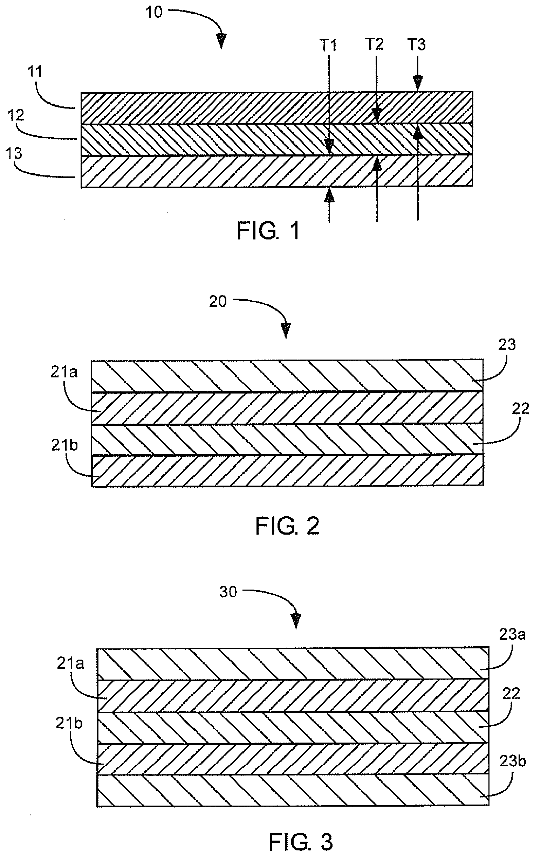

As illustrated in FIG. 1, an x-ray window 10 is shown comprising a stack of at least three layers 11-13 of material. The layers 11-13 include at least one aluminum layer, at least one amorphous carbon layer, and at least one polymer layer. The layers can each have a thickness T1-3.

Use of polymer layer(s) can be beneficial for providing structural strength to the window. Aluminum layer(s) can provide improved gas impermeability to the window. Amorphous carbon layer(s) can provide corrosion resistance. These materials have fairly low atomic numbers, thus minimizing x-ray spectra contamination.

The aluminum layer(s) can be substantially pure aluminum, or can include other elements. For example, a mass percent of aluminum in the aluminum layer(s) can be at least 80% in one embodiment, at least 95% in another embodiment, or at least 99% in another embodiment. In the various embodiments described herein, the aluminum layer(s) can have various thicknesses. For example, the aluminum layer(s) can have a thickness of between 10 to 30 nanometers in one embodiment, or a thickness of between 10 to 60 nanometers in another embodiment.

The amorphous carbon layer(s) can comprise only carbon, or substantially only carbon, in one embodiment. The amorphous carbon layer(s) can have various percentages of carbon. For example, a mass percent of carbon in the amorphous carbon layer(s) can be at least 80% in one embodiment, at least 95% in another embodiment, or at least 99% in another embodiment.

Hybridization of carbon in the amorphous carbon layer(s) can include both sp3 hybridization and sp2 hybridization in various relative percentages. For example, the percent sp3 hybridization can be between 5% and 25% in one embodiment, between 15% and 25% in another embodiment, between 5% and 15% in another embodiment, but, in all embodiments, less than 25%. The percent sp2 hybridization can be between 75% and 95% in one embodiment, between 85% and 95% in another embodiment, between 85% and 95% in another embodiment, but, in all embodiments, greater than 75%. The amorphous carbon layer(s) can be hydrogenated amorphous carbon layer(s) in another embodiment. Hydrogen inside the amorphous carbon matrix can help to stabilize the sp3 carbon atoms and can improve the cohesiveness of the layer. There can be many different percentages of atomic percent of hydrogen in the hydrogenated amorphous carbon layer. For example, an atomic percent of hydrogen in the hydrogenated amorphous carbon layer can be between 50% and 70% in one embodiment, between 25% and 51% in another embodiment, between 14% and 26% in another embodiment, between 5% and 15% in another embodiment, between 1% and 10% in another embodiment, or between 0.1% and 2% in another embodiment.

The amorphous carbon layers can have various thicknesses. For example, the amorphous carbon layer(s), including hydrogenated amorphous carbon layer(s), can have a thickness of between 5 to 25 nanometers in one embodiment, or a thickness of between 1 to 25 nanometers in another embodiment.

The polymer layer(s) can have various mass percentages of polymer. For example, a mass percent of polymer in the polymer layer(s) can be at least 80% in one embodiment, at least 95% in another embodiment, or at least 99% in another embodiment. The term "mass percent of polymer" means percent by mass in the layer that are elements of the polymer selected, such as carbon and hydrogen, and possibly other elements, depending on the polymer selected. The polymer layer can consist of only polymer in one embodiment, or can include other elements or molecules in another embodiment.

The polymer layer(s) can have various thicknesses. For example, and the polymer layer can have a thickness of between 150 to 300 nanometers.

The polymer can be or can include a polyimide. Polyimide can be useful due to its high strength and high temperature resistance as compared with many other polymers.

As illustrated in FIG. 2, an x-ray window 20 is shown comprising a stack of thin film layers including a first aluminum layer 21a, a second aluminum layer 21b, a polymer layer 22, and an amorphous carbon layer 23. An order of the stack of thin film layers is the amorphous carbon layer 23, the first aluminum layer 21a, the polymer layer 22, then the second aluminum layer 21b. In other words, the first aluminum layer 21a and the polymer layer 22 are disposed between the amorphous carbon layer 23 and the second aluminum layer 21b and the polymer layer 22 is disposed between the two aluminum layers 21a-b. The polymer layer 22 can provide structural support. The two aluminum layers 21a-b, which sandwich the polymer layer 22, can help provide gas impermeability. The amorphous carbon layer 23 can provide corrosion protection to the first aluminum layer 21a.

As illustrated in FIG. 3, an x-ray window 30 is shown comprising a stack of thin film layers including a first aluminum layer 21a, a second aluminum layer 21b, a polymer layer 22, a first amorphous carbon layer 23a, and a second amorphous carbon layer 23b. An order of the stack of thin film layers is the first amorphous carbon layer 23a, the first aluminum layer 21a, the polymer layer 22, the second aluminum layer 21b, then the second amorphous carbon layer 23b. In other words, the polymer layer 22 is disposed between the two aluminum layers 21a-b. The polymer layer 22 and the two aluminum layers 21a-b are disposed between two amorphous carbon layers 23a-b. The polymer layer can 22 provide structural support. The two aluminum layers 21a-b, which sandwich the polymer layer 22, can help provide gas impermeability. The amorphous carbon layers 23a-b can provide corrosion protection to the aluminum layers 21a-b. Selection of the x-ray window 20 of FIG. 2 or the x-ray window 30 of FIG. 3 may be made based on whether there is a need for corrosion protection of both aluminum layers 21a-b, manufacturability, cost considerations, and the amount of x-ray attenuation caused by the second amorphous carbon layer 23b.

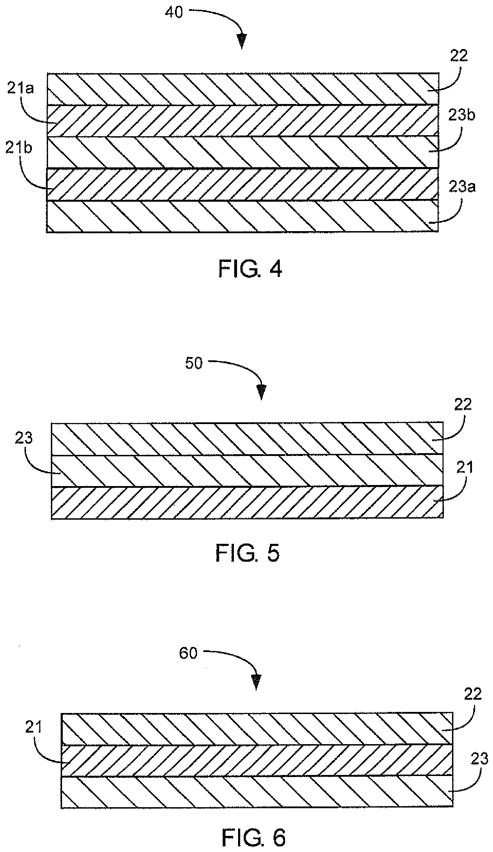

As illustrated in FIG. 4, an x-ray window 40 is shown comprising a stack of thin film layers including a first aluminum layer 21a, a second aluminum layer 21b, a polymer layer 22, a first amorphous carbon layer 23a, and a second amorphous carbon layer 23b. An order of the stack of thin film layers is the polymer layer 22, the first aluminum layer 21a, the second amorphous carbon layer 23b, the second aluminum layer 21b, then first amorphous carbon layer 23a. In other words, the second amorphous carbon layer 23b is disposed between the two aluminum layers 21a-b. The second amorphous carbon layer 23b and the two aluminum layers 21a-b are disposed between the polymer layer 22 and the first amorphous carbon layer 23a. The polymer layer can 22 provide structural support. The two aluminum layers 21a-b can help provide gas impermeability. The amorphous carbon layers 23a-b can provide corrosion protection.

As illustrated in FIG. 5, an x-ray window 50 is shown comprising a stack of thin film layers including an aluminum layer 21, a polymer layer 22, and an amorphous carbon layer 23. An order of the stack of thin film layers is the polymer layer 22, the first amorphous carbon layer 23, then the aluminum layer 21. In other words, the amorphous carbon layer 23 is disposed between the polymer layer 22 and the aluminum layer 21. This embodiment can be useful due to a small number of layers, thus minimizing x-ray attenuation, allowing ease of manufacturing, and reducing cost. The aluminum layer can be protected from corrosion if the aluminum layer is disposed to face a protected environment, such as the vacuum portion of the device for example, and the polymer layer disposed towards a more corrosive environment, such as the ambient air.

As illustrated in FIG. 6, an x-ray window 60 is shown comprising a stack of thin film layers including an aluminum layer 21, a polymer layer 22, and an amorphous carbon layer 23. An order of the stack of thin film layers is the polymer layer 22, the aluminum layer 21, then the amorphous carbon layer 23. In other words, the aluminum layer 21 is disposed between the polymer layer 22 and the amorphous carbon layer 23. This embodiment can be useful due to a small number of layers, which can minimize x-ray attenuation, reduce cost, and allow ease of manufacturing. The aluminum layer 21 can improve gas impermeability of the polymer layer 22 and the amorphous carbon layer can provide corrosion protection to the aluminum layer 21.

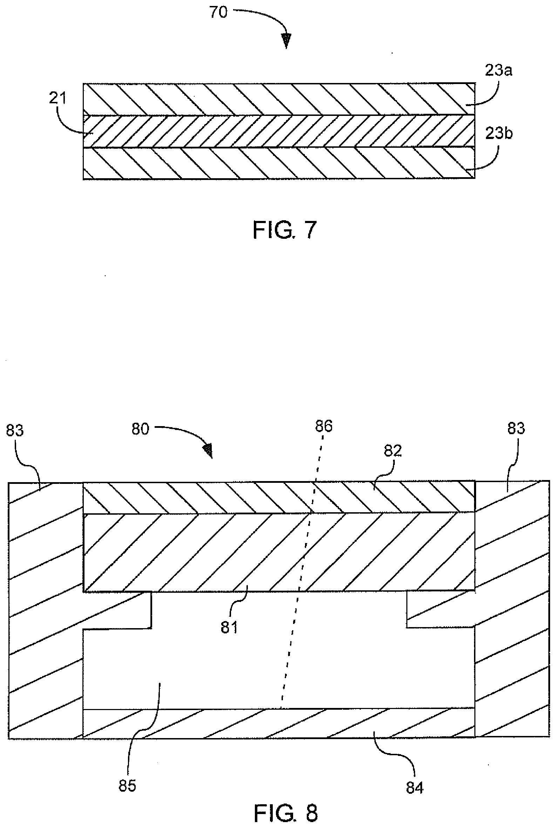

As illustrated in FIG. 7, an x-ray window 70 is shown comprising a stack of thin film layers including an aluminum layer 21, a first amorphous carbon layer 23a, and a second amorphous carbon layer 23b. An order of the stack of thin film layers is the first amorphous carbon layer 23a, the aluminum layer 21, then the second amorphous carbon layer 23b. In other words, the aluminum layer 21 is disposed between the two amorphous carbon layers 23a-b. This example, which is not part of the claimed invention, can be useful due to a small number of layers, which can minimize x-ray attenuation, allow ease of manufacturing, and reduce cost. The aluminum layer can improve strength and gas impermeability. The amorphous carbon layers 23a-b can provide corrosion protection to the aluminum layer 21.

As illustrated in FIG. 8, an x-ray window comprising a stack of thin film layers 80, according to one of the embodiments described herein, can be hermetically sealed to an opening of an enclosure 83. The enclosure 83 can include a hollow center 85. The stack of thin film layers 80 can include inner layer 81 and an outer layer 82. The inner layer 81 can include at least two layers of different materials. The outer layer 82 can be disposed as the farthest layer away from the hollow center 85. The outer layer 82 can be an amorphous carbon layer 23. Use of an amorphous carbon layer 23 as the outer layer 82 can allow the amorphous carbon layer 23 to provide corrosion protection to the inner layer 81. X-rays 86 can penetrate the window and enter the enclosure 83. The x-rays can impinge on an x-ray detector 84.

The enclosure 83 can be made of various materials, but titanium may be preferable due to a good match of the film's coefficient of thermal expansion and titanium's coefficient of thermal expansion. The titanium can be substantially pure titanium, with minimal other elements, in one embodiment. Alternatively, the titanium can include a certain percent of other elements. For example, the titanium can have a mass percent of greater than 99% in one embodiment, greater than 90% in another embodiment, or less or equal to 90% in another embodiment. The film 80 may be attached to the enclosure 83 by an adhesive, such as an epoxy.

The inner layer 81 can be a polymer layer 22 disposed between two aluminum layers 21a-b, as shown in FIG. 2. The inner layer 81 can be a polymer layer 22 disposed between two aluminum layers 21a-b, and a second amorphous carbon layer 23b disposed as the innermost layer, as shown in FIG. 3. The inner layer 81 can be a second amorphous carbon layer 23b disposed between two aluminum layers 21a-b, and a polymer layer 22 disposed as the innermost layer, as shown in FIG. 4. The inner layer 81 can be a polymer layer 22 and an aluminum layer 21, as shown in FIG. 6. According to an example, which is not part of the claimed invention, the outer layer 82 can be a first amorphous carbon layer 23b and the inner layer 81 can be an aluminum layer 21 and a second amorphous carbon layer 23b, with the aluminum layer disposed between the two amorphous carbon layers 23ab, as shown in FIG. 7. Selection of the innermost layer can depend on the effect of this innermost layer on the vacuum, such as which layer outgases the least, and on which layer can best be sealed to the device.

### HOW TO MAKE:

The aluminum layer can be evaporation deposited. The aluminum layer and / or the amorphous carbon layer can be sputter deposited. Evaporation might be selected due to lower cost. Sputter might be selected due to improved ability to control film structure and adhesion.

Amorphous carbon layers have been successfully deposited by magnetron reactive gas sputtering with the following parameters and process:
- DC Power: 400 watts
- Target: graphite (99.999% purity)
- Pump chamber pressure down to 2.3E-5 torr
- Flow Ar gas to 7mTorr
- Turn DC Power up from 50W to 400W for 2 minutes
- Flow ethylene at Ar:ethylene 9:1 ratio and dwell for 1 minute
- Open shutter for deposition. Keep the substrate plate at about 30°C with rotation.
- Close shutter and ramp down power for 2 minutes
- Vent the chamber

The various amorphous carbon and aluminum window films described herein can be attached to a support structure, such as a silicon or a carbon composite support structure. The support structure can provide additional support and can allow the window film to be made thinner and / or span larger distances. The window films can be attached to support structures, such as a carbon composite support structure for example, by a suitable adhesive, such as an epoxy, cyanoacrylate, or polyurethane.

## Claims

1. An x-ray window (10; 20; 30; 40; 50; 60; 80) comprising a stack of thin film layers including an aluminum layer (21), a polymer layer (22), and an amorphous carbon layer (23);
**characterized in that** hybridization of carbon in the amorphous carbon layer (23) is less than 25% sp3 hybridization and greater than 75% sp2 hybridization.

2. The x-ray window (10; 20; 30; 40; 50; 60; 80) of claim 1, wherein the amorphous carbon layer (23) is a hydrogenated amorphous carbon layer.

3. The x-ray window (10; 20; 30; 40; 50; 60; 80) of claim 2, wherein an atomic percent of hydrogen in the hydrogenated amorphous carbon layer (23) is between 1% and 10%.

4. The x-ray window (10; 20; 30; 40; 50; 60; 80) of claim 1, wherein the polymer is a polyimide.

5. The x-ray window (10; 20; 30; 40; 50; 60; 80) of claim 1, wherein:
a. a mass percent of aluminum in the aluminum layer (21) is at least 95%;
b. a mass percent of polymer in the polymer layer (22) is at least 95%;
c. a mass percent of carbon in the amorphous carbon layer is at least 95%.

6. The x-ray window (30) of claim 1, wherein:
a. the amorphous carbon layer (23) comprises a first amorphous carbon layer (23a) and a second amorphous carbon layer (23b);
b. the aluminum layer (21) comprises a first aluminum layer (21a) and a second aluminum layer (21b); and
c. an order of the layers in the stack of thin film layers is the first amorphous carbon layer (23a), the first aluminum layer (21a), the polymer layer (22), the second aluminum layer (21b), then the second amorphous carbon layer (23b).

7. The x-ray window (30) of claim 6, wherein:
a. the first amorphous carbon layer (23a) has a thickness of between 5 to 25 nanometers;
b. the first aluminum layer (21a) has a thickness of between 10 to 30 nanometers;
c. the polymer layer (22) has a thickness of between 150 to 300 nanometers;
d. the second aluminum layer (21b) has a thickness of between 10 to 30 nanometers; and
e. the second amorphous carbon layer (23b) has a thickness of between 5 to 25 nanometers.

8. The x-ray window (40) of claim 1, wherein:
a. the amorphous carbon layer (23) comprises a first amorphous carbon layer (23a) and a second amorphous carbon layer (23b);
b. the aluminum layer (21) comprises a first aluminum layer (21a) and a second aluminum layer (21b); and
c. an order of the layers in the stack of thin film layers is the polymer layer (22), the first aluminum layer (21a), the first amorphous carbon layer (23a), the second aluminum layer (21b), then second amorphous carbon layer (23b).

9. The x-ray window (40) of claim 8, wherein:
a. the polymer layer (22) has a thickness of between 150 to 300 nanometers;
b. the first aluminum layer (21a) has a thickness of between 10 to 30 nanometers;
c. the first amorphous carbon layer (23a) has a thickness of between 5 to 25 nanometers;
d. the second aluminum layer (21b) has a thickness of between 10 to 30 nanometers; and
e. the second amorphous carbon layer (23b) has a thickness of between 5 to 25 nanometers.

10. The x-ray window (60) of claim 1, wherein an order of the layers in the stack of thin film layers is the polymer layer (22), the aluminum layer (21), then the amorphous carbon layer (23).

11. The x-ray window (50) of claim 1, wherein an order of the layers in the stack of thin film layers is the polymer layer (22), the amorphous carbon layer (23), then the aluminum layer (21).

12. The x-ray window (50) of claim 11, wherein:
a. the polymer layer (22) has a thickness of between 150 to 300 nanometers;
b. the amorphous carbon layer (23) has a thickness of between 5 to 25 nanometers; and
c. the aluminum layer (21) has a thickness of between 10 to 30 nanometers.

13. An enclosure comprising the x-ray window (80) of claim 1:
a. wherein the enclosure (83) has a hollow center (85) and an opening, the enclosure comprising titanium;
b. wherein the stack of thin film layers is hermetically sealed to the opening of the enclosure (83); and
c. wherein the amorphous carbon layer (23) is disposed as the farthest layer (84) away from the hollow center (85).

14. The x-ray window of claim 1, wherein:
a. the aluminum layer (21) comprises a first aluminum layer (21a) and a second aluminum layer (21b); and
b. an order of the stack of thin film layers is the first aluminum layer (21a), the polymer layer (22), the second aluminum layer (21b), then the amorphous carbon layer (23).

## Patentansprüche

1. Röntgenstrahlenfenster (10; 20; 30; 40; 50; 60; 80), umfassend einen Stapel von Dünnfilmschichten einschließlich einer Aluminiumschicht (21), einer Polymerschicht (22) und einer amorphen Kohlenstoffschicht (23); **dadurch gekennzeichnet, dass** die Hybridisierung von Kohlenstoff in der amorphen Kohlenstoffschicht (23) weniger als 25 % sp3-Hybridisierung und mehr als 75 % sp2-Hybridisierung beträgt.

2. Röntgenstrahlenfenster (10; 20; 30; 40; 50; 60; 80) nach Anspruch 1, worin die amorphe Kohlenstoffschicht (23) eine hydrogenisierte amorphe Kohlenstoffschicht ist.

3. Röntgenstrahlenfenster (10; 20; 30; 40; 50; 60; 80) nach Anspruch 2, worin ein atomarer Prozentsatz des Wasserstoffs in der hydrogenisierten amorphen Kohlenstoffschicht (23) zwischen 1 % und 10 % beträgt.

4. Röntgenstrahlenfenster (10; 20; 30; 40; 50; 60; 80) nach Anspruch 1, worin das Polymer ein Polyimid ist.

5. Röntgenstrahlenfenster (10; 20; 30; 40; 50; 60; 80) nach Anspruch 1, worin:
a. ein Massenprozentsatz des Aluminiums in der Aluminiumschicht (21) mindestens 95 % beträgt;
b. ein Massenprozentsatz des Polymers in der Polymerschicht (22) mindestens 95 % beträgt;
c. ein Massenprozentsatz des Kohlenstoffs in der amorphen Kohlenstoffschicht mindestens 95 % beträgt.

6. Röntgenstrahlenfenster (30) nach Anspruch 1, worin:
a. die amorphe Kohlenstoffschicht (23) eine erste amorphe Kohlenstoffschicht (23a) und eine zweite amorphe Kohlenstoffschicht (23b) umfasst;
b. die Aluminiumschicht (21) eine erste Aluminiumschicht (21a) und eine zweite Aluminiumschicht (21b) umfasst; und
c. eine Reihenfolge der Schichten in dem Stapel von Dünnfilmschichten die erste amorphe Kohlenstoffschicht (23a), die erste Aluminiumschicht (21a), die Polymerschicht (22), die zweite Aluminiumschicht (21b), dann die zweite amorphe Kohlenstoffschicht (23b), ist.

7. Röntgenstrahlenfenster (30) nach Anspruch 6, worin:
a. die erste amorphe Kohlenstoffschicht (23a) eine Dicke von zwischen 5 bis 25 Nanometer aufweist;
b. die erste Aluminiumschicht (21a) eine Dicke von zwischen 10 bis 30 Nanometer aufweist;
c. die Polymerschicht (22) eine Dicke von zwischen 150 bis 300 Nanometer aufweist;
d. die zweite Aluminiumschicht (21b) eine Dicke von zwischen 10 bis 30 Nanometer aufweist; und
e. die zweite amorphe Kohlenstoffschicht (23b) eine Dicke von zwischen 5 bis 25 Nanometer aufweist.

8. Röntgenstrahlenfenster (40) nach Anspruch 1, worin:
a. die amorphe Kohlenstoffschicht (23) eine erste amorphe Kohlenstoffschicht (23a) und eine zweite amorphe Kohlenstoffschicht (23b) umfasst;
b. die Aluminiumschicht (21) eine erste Aluminiumschicht (21a) und eine zweite Aluminiumschicht (21b) umfasst; und
c. eine Reihenfolge der Schichten in dem Stapel von Dünnfilmschichten die Polymerschicht (22), die erste Aluminiumschicht (21a), die erste amorphe Kohlenstoffschicht (23a), die zweite Aluminiumschicht (21b), dann die zweite amorphe Kohlenstoffschicht (23b), ist.

9. Röntgenstrahlenfenster (40) nach Anspruch 8, worin:
a. die Polymerschicht (22) eine Dicke von zwischen 150 bis 300 Nanometer aufweist;
b. die erste Aluminiumschicht (21a) eine Dicke von zwischen 10 bis 30 Nanometer aufweist;
c. die erste amorphe Kohlenstoffschicht (23a) eine Dicke von zwischen 5 bis 25 Nanometer aufweist;
d. die zweite Aluminiumschicht (21b) eine Dicke von zwischen 10 bis 30 Nanometer aufweist; und
e. die zweite amorphe Kohlenstoffschicht (23b) eine Dicke von zwischen 5 bis 25 Nanometer aufweist.

10. Röntgenstrahlenfenster (60) nach Anspruch 1, worin eine Reihenfolge der Schichten in dem Stapel von Dünnfilmschichten die Polymerschicht (22), die Aluminiumschicht (21), dann die amorphe Kohlenstoffschicht (23), ist.

11. Röntgenstrahlenfenster (50) nach Anspruch 1, worin eine Reihenfolge der Schichten in dem Stapel von Dünnfilmschichten die Polymerschicht (22), die amorphe Kohlenstoffschicht (23), dann die Aluminiumschicht (21), ist.

12. Röntgenstrahlenfenster (50) nach Anspruch 11, worin:
a. die Polymerschicht (22) eine Dicke von zwischen 150 bis 300 Nanometer aufweist;
b. die amorphe Kohlenstoffschicht (23) eine Dicke von zwischen 5 bis 25 Nanometer aufweist; und
c. die Aluminiumschicht (21) eine Dicke von zwischen 10 bis 30 Nanometer aufweist.

13. Einhausung, umfassend das Röntgenstrahlenfenster (80) nach Anspruch 1:
a. worin die Einhausung (83) eine hohle Mitte (85) und eine Öffnung aufweist, wobei die Einhausung Titan umfasst;
b. worin der Stapel von Dünnfilmschichten hermetisch dicht mit der Öffnung (83) der Einhausung verbunden ist; und
c. worin die amorphe Kohlenstoffschicht (23) als die von der hohlen Mitte (85) am weitesten weg befindliche Schicht (84) angeordnet ist.

14. Röntgenstrahlenfenster nach Anspruch 1, worin:
a. die Aluminiumschicht (21) eine erste Aluminiumschicht (21a) und eine zweite Aluminiumschicht (21b) umfasst; und
b. eine Reihenfolge des Stapels von Dünnfilmschichten die erste Aluminiumschicht (21a), die Polymerschicht (22), die zweite Aluminiumschicht (21b), dann die amorphe Kohlenstoffschicht (23), ist.

## Revendications

1. Une vitre pour rayons X (10; 20; 30; 40; 50; 60; 80) comprenant une pile de couches pelliculaires minces comportant une couche d'aluminium (21), une couche polymère (22) et une couche de carbone amorphe (23) ;
**caractérisée en ce que** l'hybridation du carbone dans la couche de carbone amorphe (23) est inférieure à une hybridation sp3 de 25% et supérieure à une hybridation sp2 de 75%.

2. La vitre pour rayons X (10; 20; 30; 40; 50; 60; 80) de la revendication 1, dans laquelle la couche de carbone amorphe (23) est une couche de carbone amorphe hydrogénée.

3. La vitre pour rayons X (10; 20; 30; 40; 50; 60; 80) de la revendication 2, dans laquelle un pourcentage atomique d'hydrogène dans la couche de carbone amorphe hydrogénée (23) est entre 1% et 10%.

4. La vitre pour rayons X (10; 20; 30; 40; 50; 60; 80) de la revendication 1, dans laquelle le polymère est un polyimide.

5. La vitre pour rayons X (10; 20; 30; 40; 50; 60; 80) de la revendication 1, dans laquelle :
a. un pourcentage massique d'aluminium dans la couche d'aluminium (21) est au moins 95% ;
b. un pourcentage massique de polymère dans la couche polymère (22) est au moins 95% ;
c. un pourcentage massique de carbone dans la couche de carbone amorphe est au moins 95%.

6. La vitre pour rayons X (30) de la revendication 1, dans laquelle:
a. la couche de carbone amorphe (23) comprend une première couche de carbone amorphe (23a) et une deuxième couche de carbone amorphe (23b) ;
b. la couche d'aluminium (21) comprend une première couche d'aluminium (21a) et une deuxième couche d'aluminium (21b) ; et
c. un ordre des couches dans la pile de couches pelliculaires minces est la première couche de carbone amorphe (23a), la première couche d'aluminium (21a), la couche polymère (22), la deuxième couche d'aluminium (21b), puis la deuxième couche de carbone amorphe (23b).

7. La vitre pour rayons X (30) de la revendication 6, dans laquelle :
a. la première couche de carbone amorphe (23a) a une épaisseur d'entre 5 à 25 nanomètres ;
b. la première couche d'aluminium (21a) a une épaisseur d'entre 10 à 30 nanomètres ;
c. la couche polymère (22) a une épaisseur d'entre 150 à 300 nanomètres ;
d. la deuxième couche d'aluminium (21b) a une épaisseur d'entre 10 à 30 nanomètres ; et
e. la deuxième couche de carbone amorphe (23b) a une épaisseur d'entre 5 à 25 nanomètres.

8. La vitre pour rayons X (40) de la revendication 1, dans laquelle :
a. la couche de carbone amorphe (23) comprend une première couche de carbone amorphe (23a) et une deuxième couche de carbone amorphe (23b) ;
b. la couche d'aluminium (21) comprend une première couche d'aluminium (21a) et une deuxième couche d'aluminium (21b) ; et
c. un ordre des couches dans la pile de couches pelliculaires minces est la couche polymère (22), la première couche d'aluminium (21a), la première couche de carbone amorphe (23a), la deuxième couche d'aluminium (21b), puis la deuxième couche de carbone amorphe (23b).

9. La vitre pour rayons X (40) de la revendication 8, dans laquelle :
a. la couche polymère (22) a une épaisseur d'entre 150 à 300 nanomètres ;
b. la première couche d'aluminium (21a) a une épaisseur d'entre 10 à 30 nanomètres ;
c. la première couche de carbone amorphe (23a) a une épaisseur d'entre 5 à 25 nanomètres ;
d. la deuxième couche d'aluminium (21b) a une épaisseur d'entre 10 à 30 nanomètres ; et
e. la deuxième couche de carbone amorphe (23b) a une épaisseur d'entre 5 à 25 nanomètres.

10. La vitre pour rayons X (60) de la revendication 1, dans laquelle un ordre des couches dans la pile de couches pelliculaires minces est la couche polymère (22), la couche d'aluminium (21), puis la couche de carbone amorphe (23).

11. La vitre pour rayons X (50) de la revendication 1, dans laquelle un ordre des couches dans la pile de couches pelliculaires minces est la couche polymère (22), la couche de carbone amorphe (23), puis la couche d'aluminium (21).

12. La vitre pour rayons X (50) de la revendication 11, dans laquelle :
a. la couche polymère(22) a une épaisseur d'entre 150 à 300 nanomètres ;
b. la couche de carbone amorphe (23) a une épaisseur d'entre 5 à 25 nanomètres ; et
c. la couche d'aluminium (21) a une épaisseur d'entre 10 à 30 nanomètres.

13. Une enveloppe comprenant la vitre pour rayons X (80) de la revendication 1 :
a. dans laquelle l'enveloppe (83) présente un centre creux (85) et une ouverture, l'enveloppe comprenant du titane ;
b. dans laquelle la pile de couches pelliculaires minces est scellée hermétiquement à l'ouverture de l'enveloppe (83) ; et
c. dans laquelle la couche de carbone amorphe (23) est disposée comme la couche la plus éloignée (84) du centre creux (85).

14. La vitre pour rayons X de la revendication 1, dans laquelle :
a. la couche d'aluminium (21) comprend une première couche d'aluminium (21a) et une deuxième couche d'aluminium (21b) ; et
b. un ordre des couches dans la pile de couches pelliculaires minces est la première couche d'aluminium (21a), la couche polymère (22), la deuxième couche d'aluminium (21b), puis la couche de carbone amorphe (23).
